# EUROPEAN PATENT APPLICATION

(11) **EP 2 685 693 A1**
(43) Date of publication of application: **15.01.2014**
(21) Application number: 11860167.3
(22) Date of filing: 09.03.2011
(51) Int. Cl.: H04L 29/06

(54) **METHOD FOR GATHERING QUEUE INFORMATION AND JOB INFORMATION IN COMPUTATION ENVIRONMENT**

(71) Applicant: Computer Network Information Center, Chinese Academy of Sciences, Beijing 100190 (CN)
(72) Inventor: CHI, Xuebin, Beijing 100190 (CN); XIAO, Haili, Beijing 100190 (CN); WU, Hong, Beijing 100190 (CN); DAI, Zhihui, Beijing 100190 (CN); WANG, Xiaoning, Beijing 100190 (CN); CAO, Rongqiang, Beijing 100190 (CN)
(74) Representative: Grünecker, Kinkeldey, Stockmair & Schwanhäusser
(86) International application number: PCT/CN2011/071640
(87) International publication number: WO 2012/119310

(57) **Abstract**

A method for gathering queue information and job information in a computation environment is provided, wherein the computation environment has a configuration of three-layer multi-tree. This kind of configuration includes an main node as a root node, multiple sub-nodes as mid-layer nodes and multiple high performance computers as leaf-nodes, wherein the main node manages the entire computation environment including all sub-nodes and all high performance computers, and the sub-nodes manage the high performance computers in their precincts. Said method is characterized in that the method includes the following steps: a. the sub-nodes read the information of the high performance computers in their precincts; b. the sub-nodes periodically connect the high performance computers in their precincts according to the obtained information of the high performance computers, and use different commands to obtain the queue information and the job information based on the different types of the job management systems running in the high performance computers; c. the sub-nodes transform the obtained queue information and job information into specified format and reports them to the main node, so that the main node can obtain the current running state of the entire computation environment; d. the main node uses a dispatching strategy to auto-dispatch the jobs according to the current running state of the entire computation environment.

## Description

### Field of the Invention

This disclosure relates to the computing field, and in particular to a method for gathering queue information and job information in a computation environment, a system running this method, and a computation environment using such method or system for gathering queue information and job information.

### Background of the Invention

Nowadays, all kinds of high performance computers are distributed amongst many regions. All kinds of high performance computers use different operating systems, connecting way, job management systems as well as installed and optimized computation software. These high performance computers require high investments and maintenance fees. Only in the share mode can these high performance computers be used efficiently to maximize the profit of the investment of the high performance computers. This objective may be achieved by building a high performance computation service environment (or computation environment). Through such a computation environment, a convenient computation service is provided for users who have high performance computation requirements. As a result, the enterprises may concentrate on their business without spending a lot of time on learning the computation tools and operations. This will enhance the productivity of the research institutes and the enterprises, as well as reduce the cost.

However, there remains a need in the art for an effective way to organize and manage all kinds of high performance computers that are distributed amongst many regions. This is a constant project in the art of the high-performance-computation-environment service. Currently, there are some grid software in the art to organize and manage the distributed high performance computers effectively. However, these grid software may suffer from the following defects: connecting multiple high performance computers to a main node via one access device is not supported; multiple access modes (such as SSH, RSH, etc.) are not cocurrently supported; there is no queue information; it is not convenient to gather the job status information; the information gathering method is unstable; the gathering, showing and updating of the software information is not supported; auto-selecting a job processing queue is not supported; shifting jobs and load balance between high performance computers are not supported.

### Summary of the Invention

One or more of the above defects are addressed by providing a method for gathering queue information and job information in a computation environment.

Thus, the following embodiments are disclosed in this disclosure:
Embodiment 1. A method for gathering queue information and job information in a computation environment, wherein the computation environment has a configuration of a multi-tree (or a multi-way tree), the configuration of the multi-tree includes a main node as a root node, multiple sub-nodes as mid-layer nodes, and multiple high performance computer as leaf-nodes, wherein the main node manages the entire computation environment, which comprises all of the sub-nodes and all of the high performance computers, and the sub-nodes manage the high performance computers in their precincts,
   Said method is characterized in that the method includes the following steps:
   a). the sub-nodes read the information of the high performance computers in their precincts;
   b). the sub-nodes periodically connect the high performance computers in their precincts in accordance with the obtained information of the high performance computers, and use different commands to obtain the queue information and the job information based on the different types of the job management systems running in the high performance computers;
   c). the sub-nodes transform the obtained queue information and job information into a specified format and report them to the main node, so that the main node can timely obtain the queue information and the job information;
   d). the main node gathers and stores both the queue information and the job information which are reported by the sub-nodes.
Embodiment 2. The method of Embodiment 1, wherein, in step a), the information of the high performance computers comprises one or more of the following: a list of the high performance computers in their precincts, and static settings for each high performance computer; wherein said static settings comprise the computer name, network connection address, network connection way, the type of the job management system, and user mapping information.
Embodiment 3. The method of Embodiment 1 or 2, wherein, in step c), the reported queue information, job information, and reporting time are stored in the sub-nodes either before, during or after the queue information and the job information, which are transformed into the specific format, are reported to the main node.
Embodiment 4. The method of Embodiments 2 or 3, wherein the type of the job management systems comprises: LSF, PBS job management systems and the like. The "LSF" mentioned herein is the Load Sharing Facility job management system, it is a commercial job management system, which is commercially available from the Platform cooperation. The "PBS" mentioned herein is the Portable Batch System, which is an open source job management system, which can be downloaded from the internet.
Embodiment 5. The method of any of Embodiments 2 to 4, wherein while the queue information and the job information, which are transformed into the specific format, are reported to the main node, the main node stores the previously received information and the current time.
Embodiment 6. The method of any of Embodiments 1 to 5, wherein the interval for periodically connecting the high performance computers and obtaining the queue information and the job information is in the range of 1 second to 1 day, preferably 1 minute to 10 minutes, and more preferably I minute to 5 minutes. Alternatively, in the present invention, the interval may also vary with the different conditions, such as the interval is 5 minutes under one condition, and is 1 minute under another condition.
Embodiment 7. The method of any of Embodiments 1 to 6, wherein the storing methods for the information of the high performance computers comprises: storing in a specific data base, storing in a specific directory, storing in a specific file, or the combination thereof.
Embodiment 8. The method of any of Embodiments 1 to 7, wherein, in step a), the connecting way comprises SSH and RSH. The "SSH" mentioned herein means Secure Shell. The "RSH" mentioned herein means Remote Shell.
Embodiment 9. The method of any of Embodiments 1 to 8, wherein, the high performance computers comprises: Computing cluster, mainframe, minicomputer, work station, and personal computer.
Embodiment 10. the method of any of Embodiments 1 to 9, wherein the method further comprises the following step:
   e). the main node sends an updating request to the sub-nodes, and the sub-nodes perform steps a), b), c) and d), immediately.
Embodiment 11. The method of any of Embodiments I to 10, wherein the method further comprises the following step: f). in accordance with all of the obtained queue information and job information and a job request, the main node uses a dispatching strategy to dispatch the job.
Embodiment 12. The method of any of Embodiments 1 to 11, wherein the computation environment has a configuration of a three-layer multi-tree.
Embodiment 13. A system for gathering queue information and job information in a computation environment, wherein the computation environment has a configuration of a multi-tree, the configuration of the multi-tree includes a main node as a root node, multiple sub-nodes as mid-layer nodes, and multiple high performance computers as leaf-nodes, wherein the main node manages the entire computation environment which comprises all of the sub-nodes and all of the high performance computers, and the sub-nodes manage the high performance computers in their precincts,
   the system is characterized as a system that comprises a module 1 and a module 2,
   wherein module 1 reads the information of the high performance computers in its precinct, so that module 1 can periodically connect to each of the high performance computers in its precinct in accordance with the obtained information of the high performance computers, and use different commands to obtain the queue information and the job information based on the different types of the job management systems running in the high performance computers; then module 1 transforms the obtained queue information and job information into a specified format and sends them to module 2, so that module 2 timely obtains the queue information and the job information;
   wherein module 2 obtains and stores the queue information and the job information reported by module 1.
Embodiment 14. The system of Embodiment 13, wherein, in module 1, the information of the high performance computers comprises one or more of the following: a list of the high performance computers in the precinct of module 1, and static settings for each high performance computer; said static settings comprise the device name, network connection address, network connection means, the type of the job management system, and user mapping information.
Embodiment 15. The system of Embodiment 13 or 14, wherein, in module 2, the job dispatching is performed automatically.
Embodiment 16. The system of any of Embodiments 13 to 15, wherein, module 1 is running in the sub-nodes of the computation environment having a configuration of a multiple-layer multi-tree, module 2 is running in the main node of the computation environment.
Embodiment 17. The system of any of Embodiments 13 to 16, wherein, the system further comprises a module 3, wherein module 3 is a user interface module, and a user may access to the computation environment via module 3, and submit and manage the computation job(s).
Embodiment 18. The system of Embodiment 17, wherein the interface module provides at least the following two ways for connecting: a command line way, and a Portal way.
Embodiment 19. The system of any of Embodiments 13 to 18, wherein, in module 1, the reported queue information, job information, and reporting time are stored in module 1 before, during or after the queue information and the job information, which are transformed into the specific format, are reported to module 2 by module 1.
Embodiment 20. The system of any of Embodiments 13 to 19, wherein, the type of the job management system comprises LSF, PBS job management systems and the like.
Embodiment 21. The system of any of Embodiments 13 to 20, wherein, the interval for periodically connecting the high performance computers and obtaining the queue information and the job information is in the range of 1 second to 1 day, preferably 1 minute to 10 minutes, and more preferably 1 minute to 5 minutes.
Embodiment 22. The system of any of Embodiments 13 to 21, wherein, in module 1, the storing methods for the information of the high performance computers comprises: storing in a specific data base, storing in a specific directory, storing in a specific file, or the combination thereof.
Embodiment 23. The method of any of Embodiments 12 to 22, which is characterized in:
   module 2 can send updating requests to module 1, and module 1, in accordance with the request, reads the information of the high performance computers in its precinct immediately, and connect each of the high performance computers in its precinct in accordance with the obtained information of the high performance computers, and use different commands to obtain the queue information and the job information based on the different types of the job management systems running in the high performance computers; then module 1 transforms the obtained queue information and job information into a specified format and sends them to module 2, so that module 2 timely obtains the current running status of the entire computation environment.
Embodiment 24. The method of any of Embodiments 13 to 23, wherein one or more of modules in the system are implemented through software.
Embodiment 25. The method of any of Embodiments 13 to 24, wherein module 2 further uses a dispatching strategy to dispatch the job in accordance with the obtained queue information and job information and a job request.
Embodiment 26. The method of any of Embodiments 13 to 25, wherein the computation environment has a configuration of a three-layer multi-tree.
Embodiment 27. A computation environment using the system of any of the embodiments 13 to 26 or the method of any of the embodiments 1 to 12.

One or more of the following effects are achieved by the present invention:
1. The method and system of the present invention, when used in the multiple-layer high performance computation environment of the present invention, will meet the needs for connecting multiple high performance computers via one sub-node server. This will reduce the hardware cost for connecting computation resources and the maintenance cost. Concurrently, since the sub-nodes have some management function over the high performance computers in their precinct, the management load of the main node is also reduced. The flexibility of connecting a high performance computer to the main node via a sub-node is enhanced. Moreover, the sub-node may update the number, type, etc. of the high performance computers in its precinct at any time, which makes it more convenient for the sub-node to arrange the sharing resources. Thus, in the method of the present invention, the functions of the nodes in the entire computation environment are clearly classified, and divided into three levels, whereas each level of node has a very distinct job.
2. Furthermore, the method or the system of the present invention enables that, in a computation environment which comprises the method or the system, a sub-node is able to access multiple high performance computers in different ways. The stored setting information leads to automatically support the different connecting means.
3. Furthermore, the method or the system of the present invention enables that, in a computation environment which comprises the method or the system, a sub-node is compatible with the high performance computers in its precinct. The high performance computers have different job management systems, and concurrently, the sub-node provides the main node and the user with the queue information and job information of the specific format. This allows the user to neglect the differences between various job management systems, and enables the user to use different job management systems by learning a single specific operation, so that he can concentrate more on his computation or research tasks.
4. Furthermore, the computation environment using the method or system of the present invention can gather computational resource information (including high performance computer, queue and job information, etc.) from the complicated world wide web and show the information to the user in a stable and timely way. Such information is the fundamental information for the user who wants to use the computation environment. Stable and timely information is of significant importance for improving the quality of service of a computation environment.
5. Furthermore, storing the queue information and job information in the sub-node renders that it is possible to check and compare the running status of the high performance computers in the precinct of the sub-node. Exceptionally, the system may be repaired manually by using this information.
6. Furthermore, the interval for a sub-node to report the queue information and the job information to the main node is set as a certain value as needed.
   This may timely update the information of the computation node provided that the network resource and the load of the whole computation environment permits. The increase of the number of the sub-nodes and leaf-nodes has little impact on the load of the whole computation environment, and this will improve the running stability and robustness of the software.
7. Furthermore, the sub-nodes may connect to the high performance computers in a variety of ways. This means that the high performance computers, employing different connecting methods, may connect to the main node via one sub-node. This makes the high performance computation service environment of a multi-tree configuration possible, and allows more leaf-nodes to conveniently join the whole computation service environment via a near sub-node while possessing excellent expansibility.
8. Furthermore, in the present invention, the step of timely updating the queue information and job information initiated by the main node further diversifies the method for gathering queue information and job information of the invention. This means the system may provide the user with the queue information and job information in a more expedited stable way.
9. Furthermore, the high performance computation service environment using the method or system of the invention is very stable, as it will not affect the computation of users when one individual high performance computer fails. Moreover, the failure of one sub-node will not affect other sub-nodes or the high performance computers in their precincts.

### Brief Description of the Drawings

The embodiments of the invention, the advantages of the invention and the characters of the invention will be described in detail with reference to the figures, which should not be construed as a limitation on the invention. In the figures, the same symbol indicates the same component.
Fig. 1 is an example of an embodiment of a high performance computation service environment having a configuration of a three-layer multi-tree, which also illustrates the steps of the method of the present invention.
Fig. 2 is a flow chart of the various steps of the method of the present invention.

### Detailed Description of the Preferred Embodiment

The present invention is to be described in detail in combination with the embodiments illustrated in the figures, and it is to be understood that such description is just illustrative of the invention and should not be understood as a limitation on the invention in any way. The scope of the present invention is defined only by the scope of the attached claims.

Although the present invention is described by using the "high performance computer" and "high performance computation service environment" as examples, it is to be understood by a person skilled in the art that a high performance computer may also be substituted with "computer", and a high performance computation service environment may also be substituted with a "computation environment".

A high performance computation service environment refers to a combination of high performance computer hardware and software, which integrates multiple high performance computers and provides users with a unitive computation service. A high performance computation service environment usually comprises multiple high performance computers. These terms "high performance computer", "parallel computer" and "Computing cluster" used herein may be used in an interchangeable way. The term "computation environment" used herein means "a high performance computation service environment", "high performance computation environment" or "high performance service environment," and any such terms may be used in an interchangeable way.

A high performance computation service environment having multiple layers refers to: in a high performance computation service environment, the hardware consisting of the environment is divided into several layers with each layer being in charge of a different mission so as to form the high performance computation service environment having multiple layers. The layers may be divided functionally, or geographically, or based on the computation ability of the computers.

A main node: in a high performance computation service environment, there is only a single portal for the users, whereby this portal performs the unitive managing of the hardware and the software in the entire environment as well as the running status of the environment, and provides a unitive service.

A sub-node: relative to a main node, the node connecting to the main node directly is called as a sub-node. The sub-node usually also connects to the nodes which belong to the lower layers. There is a portal to access the computation service for the users.

A high performance computer is a high performance computer which performs the computation mission in a high performance computation service environment, and belongs to the bottom layer of the high performance computation service environment as well as executes each specific computation job.

In the present invention, the high performance computers in the precincts of a sub-node refers to the leaf-nodes subject to the sub-node, or the leaf-nodes below the sub-node within a computation environment having a configuration of a multi-tree.

The term "grid software" has the common meaning in the art, and generally refers to a system software which provide users with supporting service for computation in a computation environment.

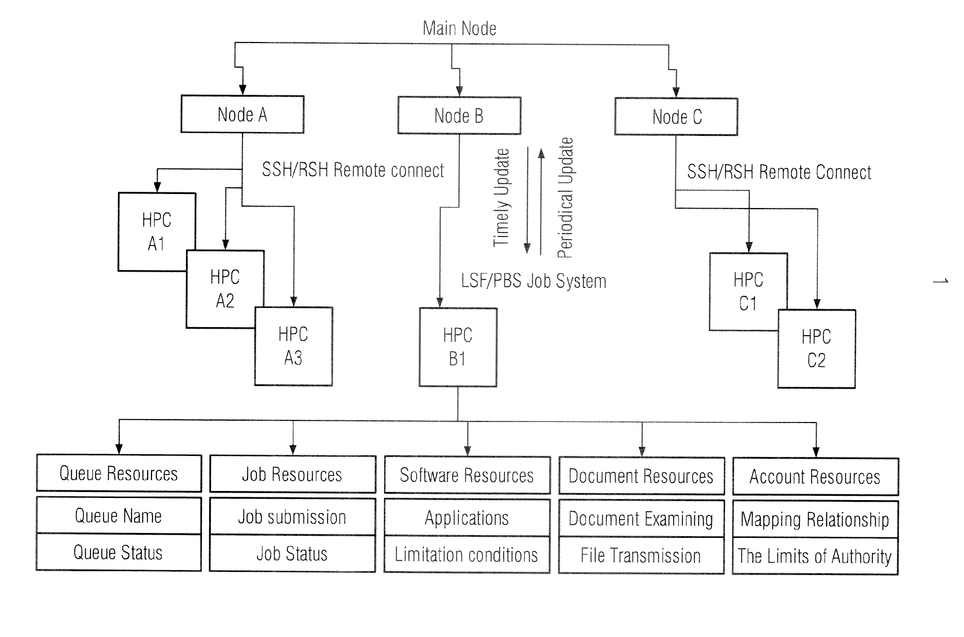

Fig. 1 shows a high performance computation service environment having a configuration of a three-layer multi-tree. In fig. 1, one main node functions as the root node, three sub-nodes(NODE A, NODE B and NODE C) function as mid-layer nodes, and under each sub-node there is one to three high performance computers functioning as leaf-nodes, wherein the main node manages the entire high performance computation service environment and the sub-nodes manage the high performance computers in their precincts. In such a computation environment, each high performance computer is installed with various applications according to the characteristics of each high performance computer. The established computation environment provides a unitive computation service via the main node. The scope for providing computation service will vary with the change of the high performance computers.

In an embodiment, the method of the present invention enables the high performance computation service environment having a multiple-tree configuration to timely obtain the queue and job information of each high performance computer, and to provide users with stable computation service.

Furthermore, in figure 1, the topside is the main node, which is in the upper layer of the three-layer high performance computation service environment, which provides users with computation service, and manages the entire environment. Below the main node, there are three sub-nodes: NODE A, NODE B and NODE C, with each managing the high performance computers in its precinct. The high performance computers in the precinct of NODE A comprise the high performance computers HPC-A1, HPC-A2 and HPC-A3, which are connected remotely by way of SSH or RSH; the high performance computer in the precinct of NODE B comprises the high performance computer HPC-B 1; the high performance computers in the precinct of NODE C comprises high performance computers HPC-C1 and HPC-C2, which are connected remotely by way of SSH or RSH; wherein the job management system of each high performance computer may be LSF or PBS. Each high performance computer comprises the following resources: queue resources (including the queue names and the queue status), job resources (including the job submission and job status), software resources (including applications and limitation conditions), document resources (including document examining and document transmission) and the account resources (including mapping of the accounts/users and the limits of authority), which are all useful information for the main node to dispatch the resources of the entire high performance computation service environment.

In an embodiment, the steps of the method of the invention comprise:
a. the sub-nodes read the information of the high performance computers in their precincts, wherein the information of the high performance computers comprises: a list of the high performance computers in their precincts, and the static settings for each high performance computer; wherein said static settings comprise the device name, network connection address, network connection means, the type of the job management system and user mapping information;
b. the sub-nodes periodically connect to the network connection address of the high performance computers in their precincts in accordance with the obtained information of the high performance computers in their precincts via the respective network connection means, and, use different commands to obtain the queue information and the job information based on the different types of the job management systems running in the high performance computers;
c. the sub-nodes transform the obtained queue information and job information into a specified format, store them and report them to the main node, so that the main node can timely obtain the current running state of the entire high performance computation service environment;
d. depending on the running state of the entire high performance computation service environment, the main node uses a dispatching strategy to automatically dispatch jobs.

In step (a), the storing methods for the information of the high performance computers comprises: storing in a specific data base, storing in a specific directory, storing in a specific file, or the combination thereof. In an embodiment, storing the information of the high performance computers in the precinct of a sub-node is realized by storing useful information in directory.

One directory structure for a sub-node is as follows. The following directory structure shows a specific way to store the information of the high performance computers in the precincts of the sub-node (NODE C).

```
     node C
     |......
     |-- fs
     | |-- bin
      | | -- report
      | | '-- queue
      | |-- etc
      | | |-- jms
      | | '-- sh
      | '-- hpc
      | |--HPC-C1
      | | |-- app
      | | |-- etc
      | | |-- lib
      | | |-- queue
      | | '-- tmp
      | |--HPC-C2
      | | |--app
      | | |-- etc
      | | |-- lib
      | | |-- queue
      | | '-- tmp
      |.......
```

In this way of storing, node C (or NODE C) is the name of the sub-node, below which there is a directory "fs", wherein, the managing working on the high performance computers in its precincts is performed by the directory "fs". In the lower directory of the directory "fs", there is a directory "hpc" to store each super computer (i.e. high performance computers) in the precincts of node C and their names: HPC-C1 and HPC-C2. In the directories "HPC-C1" and "HPC-C2", a directory "app" is created to store the information of the applications installed in each high performance computer and providing service to users, the directory "lib" is used to store the static settings of the high performance computer, the directory "queue" is used to store the settings of the queue in the high performance computer, there is also a directory "tmp" to store the information of the temporary documents, such as to store the queue information and job information of the high performance computer chronologically.

In step (b), in the event that the high performance computers use different job management systems, a command corresponding to the specific job management system is to be used to obtain the relevant queue information and job information.

In the method, a sub-node such as NODE C obtains the queue information, job information, and the information of the software and hardware resources of the high performance computers via different ways based on the specific information of each high performance computer stored in the directory, processes such information and reports them to the main node. When a user submits a new computation job, the main node receives and processes the submission, via a meta-scheduling algorithm such as First-In-First-Out (FIFO) to match the suitable resources, and dispatch the computation job to the corresponding high performance computer in the precincts of a sub-node to deal with the job. Meanwhile, the sub-node is responsible for various managing actions on the job, including monitoring the status of the job, managing the data of the job, etc.. The sub-node determines the way to connect the high performance computer, the username, etc. according to the computation job submission and the stored information of the high performance computers, transmits input files needed for executing the job, and submits the job.

Before a sub-node reports the obtained queue information and job information to the main node, the queue information and job information are transformed into a specific format.

The format of the queue information obtained from the LSF job management system is exemplified as follows:

| LSF | | | | | | | | | |
|---|---|---|---|---|---|---|---|---|---|
| QUEUE_NAME SUSP | PRIO STATUS | MAX | JL/U | JL/P | JL/H | NJOBS | PEND | RUN | |
| bigmem | 50 Open:Active | - | - | - | - | 0 | 0 | 0 | 0 |
| normal | 40 Open:Active | - | - | - | - | 24 | 0 | 24 | 0 |
| RUNLIMIT | | | | | | | | | |
| 360.0 min | | | | | | | | | |
| PROCLIMIT | | | | | | | | | |
| 16 16 256 | | | | | | | | | |

The format of the queue information obtained from the PBS job management system is exemplified as follows:

| PBS | | | | | | | | | | |
|---|---|---|---|---|---|---|---|---|---|---|
| Queue | Max | Tot | Ena | Str | Que | Run | Hld | Wat | Trn | Ext T |
| aque | 0 | 96 | yes | yes | 51 | 45 | 0 | 0 | 0 | 0 E |
| bque | 0 | 30 | yes | yes | 4 | 26 | 0 | 0 | 0 | 0 E |

The queue information of the specific format obtained from the output files of the present invention is exemplified as follows:

```
                                       SCE
     #Add queue
     queue
     Queuename=QN_Norm
     Walltimelimit=360
     Maxcpucount=256
     Mincpucount=16
```

The shown queue information of the specific format comprises: queue name (Queuename=QN_Norm), time limit of the queue (Walltimelimit=360), maximum cpu number (Maxcpucount=256) and minimum cpu number (Mincpucount=16). Such information will become important limitations information for the main node to match the suitable queue according to the computation request of a user. Actually, the job and queue information of the specific format may comprise more information.

Similarly, the job information of a high performance computer in the precinct of a sub-node may be obtained via the sub-node, and may be transformed into a specific format to be reported to the main node. The timely job information is an important consideration for the main node to match the high performance computers. At the same time, the timely job information may provide the following information to the users: timely information on how busy the high performance computer are, and the information on the computation status of the user's job.

For example, if HPC-C1 needs to be connected by way of S SH, and uses LSF job management system, then NODE C will automatically use the command "ssh HPC-C1" to connect to HPC-C1, and accordingly use the command of LSF "bjobs" to get the current queue and job information. For another example, if HPC-C2 needs to be connected by way of RSH, and uses PBS job management system, then NODE C will automatically use the command "rsh HPC-C2" to connect to HPC-C2, and accordingly use the command of PBS "qstat" to get the current queue and job information. NODE C transforms the data obtained from HPC-C1 and HPC-C2 into the specific format to be reported to the main node(which will be detailed in the following content).

Actually, the task of transforming the job and queue information into a specific format may also be performed by the main node. In this way, the sub-node only needs to report the original data to the main node. However, in order to relieve the burden of the main node, the sub-nodes usually perform this task.

An example of the static settings for a sub-node to connect to a high performance computer in the precinct of the sub-node is as follows:

```
     host=" 1.2.4.4"
     port=" 1234"
     FILE_DIR="∼/sce/workspace"
     # SYSTEM configure job management system, the value can be LSF,PBS
     SYSTEM=LSF
     # SH configure the shell connect manner, the value can be RSH,SSH,LSH
      SH=SSH
```

In accordance with the above information on settings, a sub-node may automatically match the following resources: the site of a high performance computer in the internet, port information, working directory, the type of the job management system and connecting means. Thus, the information of the high performance computer in the method of the present invention comprises the site of the high performance computer in the internet, port information, working directory, the type of the job management system, and the connecting means, etc.

The username used by a sub-node in connecting to a high performance computer may be different from the username used by the main node to submit the computation request. In this situation, there is also a need to store username mapping information in the sub-node.

An example of the username mapping information is as follows:

| usermap: | |
|---|---|
| griduser 1 | user001 |
| griduser2 | user002 |
| griduser3 | user003 |

So far, the disclosed method of the present invention may implement the dynamic gathering of hardware resources and the dynamic gathering of queue and job information. The dynamic information of the high performance computers and the dynamic information of the queue and job information may be timely transmitted to the main node by performing the following steps: storing the information in a sub-node of the high performance computers in its precinct, periodically checking the status of the high performance computers in its precinct and gathering the queue and job information, transforming the obtained information into a specific format, and reporting it to the main node. The users may manually manage their computation jobs by the display connected to the main node, so as to timely receive the computation results. The main node may also automatically dispatch the computation jobs according to the obtained information. In the present invention, there is no limitation on the dispatching algorithm. The most commonly used dispatching algorithms comprises but not limited to: matching the information such as the application type, CPU number and computation duration of a computation job submitted by a user, then submitting the computation job to the high performance computer which meets the requirement in the information such as the application type, CPU number, computation duration, etc. and has the least queued jobs. The present invention enables the connection of more than one high performance computer to the main node via one sub-node. Such merits save the cost for resource access as well as improve the flexibility and robustness for managing the environment.

In addition, for the user's computation requirement, a sub-node needs to get the suitable environment variables for the application needed by the user. For this reason, it is necessary to store such information corresponding to the application in the sub-node. For example, if an application "testA" is installed in HPC-C1, a configuration file for testA "testA.profile" is stored in the directory "HPC-C1/app" of the sub-node:

```
 #!/bin/bash
      ["$1" = "-d"] && {
             #This is the discription of the application, which can be modified.
             echo -e " testA. Provided by x.xx."
             exit 0
      }
      ["$1"="-q"]&&{
             #You can list all the queues that can run this app, each one in a line.
               echo -e "QS_Norm"
               echo -e "QN_Norm"
           exit 0
      }
      ["$1"="-p"]&&{
         # sourced all the ARGs
         ."$2"
          # executable and arguments of this application
          RUN_PROGRAM="source /software_path/testA.profile; testA $ARG0"
          echo ${RUN_PROGRAM}
          exit 0
       }
```

With such a simple configuration file, the following parameters of the application are set: the description information, the queue limitation information, and the running method, etc.

Furthermore, the present method may comprise the following steps: e. the main node sends an updating request to the sub-nodes, the sub-nodes perform steps a), b), c) and d), immediately. A combination of a timing trigger and a user trigger may guarantee that the status of the entire high performance computation service environment is shown to the users in a stable and reliable way.

In addition, the present method is applicable to a multiple-layer high performance computation service environment that has a configuration of more than three layers, such as four layers, five layers, six layers, seven layers, or more.

In addition, in one embodiment, the present disclosure also provides a grid software using the above method, or implementing one or more steps in the method of the present invention for the use in a multiple-layer high performance computation service environment that has a multi-tree configuration. Such software permits the user to arbitrarily choose the connection means, the type of the job management system, etc. of the high performance computers connected to the whole high performance computation service environment.

In addition, in one embodiment, the grid software of the present invention provides two kinds of user interfaces, one is graphical Portal form and the other is the traditional command line form. These two forms meet almost all of the requirements of the users who perform computation tasks with computers. Traditionally, a Portal form is known to use a webpage or a browser.

In addition, the present disclosure also provides a multiple-layer high performance computation service environment that has a configuration of three-layer multi-tree as described above, whereas it uses the method of the present invention to gather resources or uses the grid software of the present invention.

We further provide the following information to illustrate the invention:

In practice, a computation service environment usually uses a configuration of three-layer multi-tree. A supercomputing service environment of a three-layer configuration comprises a lot of high performance computers (i.e. leaf-nodes), and such nodes may be a large national supercomputer center, a regional supercomputer center, or a small supercomputer center in an institution or even in a research team specialized in scientific research. The number of the supercomputing resources (high performance computer/HPC) possessed by such different nodes may be 1 to more than 10. Furthermore, such supercomputing resources may have different scales, which may have an order of magnitude from teraflops to petaflops or more, as well as different architecture and management model. As for the information of these high performance computers, some is static (such as the number of CPU and the memory of every high performance computer), some is dynamic (such as the queue status, running status of jobs, etc.), some is changed occasionally between static and dynamic (such as the settings of a queue, the user rights, information of applications). One of the critical techniques and critical steps to implement a high performance computation service environment is to obtain and gather such dynamic information from the complex dynamic internet environment and then show such information to the users in a stable way.

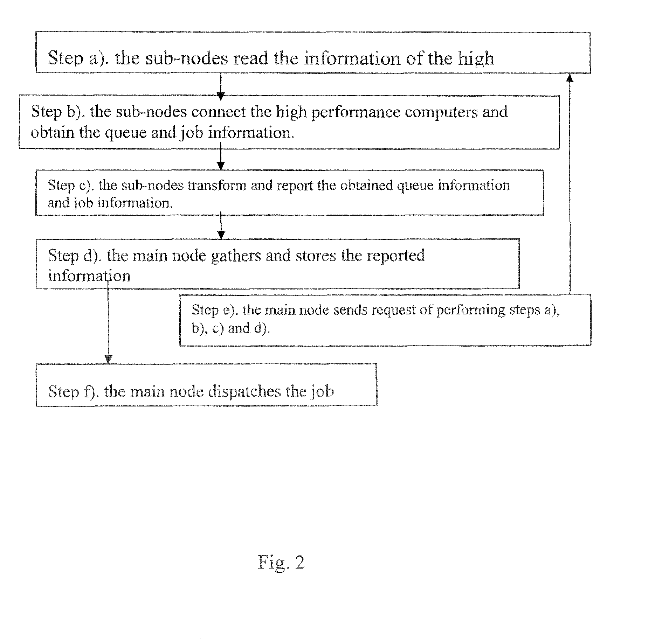

Figure 2 gives a typical example of a flow chart for the various steps of the method of the present invention. The method of the present invention for gathering queue information and job information in a computation environment may comprises the following 6 steps: a, b, c, d, e and f, wherein steps a, b, c and d are necessary to obtain the objective of the present invention, and steps e and f are steps for preferable embodiments.

The present disclosure provides a flexible method for gathering dynamic resources, which overcomes many technical difficulties, including but not limited to the following:
1. The need of connecting multiple high performance computers to a main node via a single sub-node server is met. In different sub-nodes, some have only one high performance computer, some have 2-3 or more high performance computers. Traditionally, it is likely to require that every high performance computer to be equipped with one individual access computer (i.e. sub-node). As a result, this will increase the costs for the hardware and maintenance. When all resources are connected to the main node, the connecting cost will be significantly reduced. The resources of multiple high performance computers are all connected to the main node via the same access server and software.
2. For various sub-nodes, the access servers are permitted to access the high performance computers in their precincts in different ways. In some nodes, it is permitted for the access server to be equipped inside the high performance computer and directly obtain the information of the high performance computer. In other nodes, the access server is separated from the high performance computers and it is necessary to access the high performance computers remotely through SSH or RSH. The method and software of the present invention simultaneously support the management ways and the settings. When using a different way, the method and software of the present invention supports it automatically by amending the static configuration settings to reflect the differences.
3. Different job management systems are installed in different high performance computers. There are some popular commercial software such as LSF, PBS Pro, and some open source free software such as OpenPBS, Torque, SGE, etc. Thus, there are different ways to obtain the queue and queuing information as well as submit the jobs. The method and grid software of the present invention are compatible with different job management systems. When using a different way, the method and software of the present invention support them automatically by amending the static configuration settings to reflect the di fferences.
4. In the complex dynamic internet environment, it is important to show the gathered resources information (including the information on queue, job, software, documents, accounts, etc) to the users in a stable way. The method and software of the present invention realize two trigger mechanisms: timing trigger and user trigger. The timing trigger is used to periodically obtain and update the dynamic information of the systems. A system is considered as being offline or out of service if no update information is obtained in one cycle. Such period is settable. Generally, the period is selected as 1-10 minutes, or longer, such as 1 hour, or shorter, such as 1 second. For most of the systems and users, an update period of 1-10 minutes is suitable. The mechanism of timing trigger may guarantee the timely and consistent acquisition of information for users. For the users, the speed of obtaining information will not change with the changing of the internet environment. In order to overcome the defect of the timing trigger, the user may also trigger the update mechanism to obtain the current information. Such a mechanism is very important to improve the user's experience.

In addition, the present disclosure also provides a system corresponding to the method of the present invention.

A system for gathering queue information and job information in a multi-layer high performance computation service environment, wherein the computation environment has a multi-tree configuration. The multi-tree configuration includes a main node as a root node, multiple sub-nodes as mid-layer nodes, and multiple high performance computers as leaf-nodes. The main node manages the entire high performance computation service environment, which comprises all of the sub-nodes and all of the high performance computers. The sub-nodes manage the high performance computers in their precincts.

The system is characterized as a system that comprises a module 1 and a module 2,
wherein module 1 reads the information of the high performance computers in its precinct, so that module 1 can periodically connect each of the high performance computers in its precinct in accordance with the obtained information of the high performance computers, and use different commands to obtain the queue information and the job information based on the different types of the job management systems running in the high performance computers. Then module 1 transforms the obtained queue information and job information into a specified format and sends them to module 2, so that module 2 timely obtains the current running status of the entire high performance computation service environment.

In accordance with the obtained current running status of the entire high performance computation service environment, module 2 uses a dispatching strategy to dispatch the job.

This system of course may also have a series of additional technical features and improvements corresponding to the method of the present invention.

In an embodiment of the system of the present invention, wherein in module 1, the information of the high performance computers comprises one or more of the following: a list of the high performance computers in the precinct of module 1 and the static settings for each high performance computer; said static settings comprise the device name, network connection address, network connection means, the type of the job management system, and user mapping information.

In an embodiment of the system of the present invention, wherein, in module 2, the job dispatching is performed automatically.

In an embodiment of the system of the present invention, wherein, module 1 is running in the sub-nodes of the multiple-layer computation environment having a configuration of a multiple-layer multi-tree, and module 2 is running in the main node of the computation environment.

In an embodiment of the system of the present invention, wherein, the system further comprises a module 3. Module 3 is a user interface module. A user may access the computation environment as well as submit and manage the computation job(s) via module 3.

In an embodiment of the system of the present invention, wherein the interface module provides at least the following two ways for connecting: a command line way, and a Portal way.

In an embodiment of the system of the present invention, wherein, in module 1, the reported queue information, job information, and reporting time are stored in module 1 before, during or after the queue information and the job information, which are transformed into the specific format, are reported to module 2 by module 1.

In an embodiment of the system of the present invention, wherein, the type of the job management system comprises LSF, PBS job management systems, and the like.

In an embodiment of the system of the present invention, wherein, the interval for periodically obtaining the queue information and the job information is in the range of 1 second to 1 day, preferably 1 minute to 10 minutes, and more preferably 1 minute to 5 minutes.

In an embodiment of the system of the present invention, wherein, in module 1, the storing methods for the information of the high performance computers comprises: storing in a specific database, storing in a specific directory, storing in a specific file, or the combination thereof.

In an embodiment of the system of the present invention, it is characterized in:
Module 2 can send an updating request to module 1. Module 1, in accordance with the request, reads the information of the high performance computers in its precinct immediately, and connect to each of the high performance computers in its precinct in accordance with the obtained information of the high performance computers, and use different commands to obtain the queue information and the job information based on the different types of the job management systems running in the high performance computers. Then module 1 transforms the obtained queue information and job information into a specific format and sends them to module 2, so that module 2 timely obtains the current running status of the entire computation environment.

In an embodiment of the system of the present invention, wherein one or more of modules in the system are realized by means of a grid software.

In every embodiment of the present invention, the computation environment preferably has a configuration of three-layer multi-tree. In a three-layer configuration, the number of the sub-node layers is reduced, which is a benefit to reduce the number of the sub-nodes to reduce the complexity of the configuration. As a result, the hardware investment is reduced. An existing server is capable of managing dozens of high performance computers. Thus, presently, a three-layer configuration is efficient enough to be used for a computation environment, but it is feasible as well to use a configuration of more layers.

## Claims

1. A method for gathering queue information and job information in a computation environment, wherein the computation environment has a configuration of a multi-tree, the configuration of the multi-tree includes a main node as a root node, multiple sub-nodes as mid-layer nodes, and multiple high performance computer as leaf-nodes, wherein the main node manages the entire computation environment which comprises all of the sub-nodes and all of the high performance computers, and the sub-nodes manage the high performance computers in their precincts,
Said method is **characterized in that** the method includes the following steps:
a). the sub-nodes read the information of the high performance computers in their precincts;
b). the sub-nodes periodically connect the high performance computers in their precincts in accordance with the obtained information of the high performance computers, and use different commands to obtain the queue information and the job information based on the different types of the job management systems running in the high performance computers;
c). the sub-nodes transform the obtained queue information and job information into a specified format and report them to the main node, so that the main node can timely obtain the queue information and the job information;
d). the main node gathers and stores both the queue information and the job information which are reported by the sub-nodes.

2. The method of claim 1, wherein, in step a), the information of the high performance computers comprises one or more of the following: a list of the high performance computers in their precincts, and the static settings for each high performance computer; wherein said static settings comprise the name, network connection address, network connection means, the type of the job management system, and user mapping information.

3. The method of claim 1, wherein the interval for periodically connecting the high performance computers and obtaining the queue information and the job information is in the range of 1 second to 1 day, preferably 1 minute to 10 minutes, and more preferably 1 minute to 5 minutes.

4. The method of claim 1, wherein said method further comprising the following step:
e). the main node sends a updating request to the sub-nodes, and the sub-nodes perform steps a), b), c) and d), immediately.

5. The method of claim 1, wherein said method further comprising the following step: f). in accordance with all of the obtained queue information and job information and an job request, the main node uses a dispatching strategy to dispatch the job.

6. The method of claim 1, wherein the computation environment has a configuration of three-layer multi-tree.

7. A system for gathering queue information and job information in a computation environment, wherein the computation environment has a configuration of a multi-tree, the configuration of the multi-tree includes a main node as a root node, multiple sub-nodes as mid-layer nodes, and multiple high performance computer as leaf-nodes, wherein the main node manages the entire computation environment which comprises all of the sub-nodes and all of the high performance computers, and the sub-nodes manage the high performance computers in their precincts,
the system is characterized as a system that comprises a module I and a module 2,
wherein module 1 reads the information of the high performance computers in its precinct, so that module 1 can periodically connect each of the high performance computers in its precinct in accordance with the obtained information of the high performance computers, and use different commands to obtain the queue information and the job information based on the different types of the job management systems running in the high performance computers; then module 1 transforms the obtained queue information and job information into a specified format and sends them to module 2, so that module 2 timely obtains the queue information and the job information;
wherein module 2 acquires and stores the queue information and the job information reported by module 1.

8. The system of claim 7, wherein the interface module provides at least the following two ways for connecting: a command line way, and a Portal way.

9. The system of claim 7, wherein the type of the job management systems comprises LSF, PBS job management systems and the like.

10. The system of claim 7, wherein the computation environment has a configuration of a three-layer multi-tree.
